(19) Europäisches Patentamt
European Patent Office
Office européen des brevets

(11) EP 3 135 648 A1

# (12) EUROPEAN PATENT APPLICATION

(43) Date of publication:
**01.03.2017 Bulletin 2017/09**

(21) Application number: **15183045.2**

(22) Date of filing: **28.08.2015**

(51) Int Cl.:
***C03C 25/32*** *(2006.01)*
***D04H 1/4209*** *(2012.01)*
***D04H 1/60*** *(2006.01)*
***D04H 1/64*** *(2012.01)*
***E04B 1/76*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Rockwool International A/S**
**2640 Hedehusene (DK)**

(72) Inventor: **NÆRUM, Lars**
**2900 Hellerup (DK)**

(74) Representative: **Letzelter, Felix Phillip et al**
**Meissner Bolte Patentanwälte**
**Rechtsanwälte Partnerschaft mbB**
**Postfach 86 06 24**
**81633 München (DE)**

## (54) MINERAL WOOL PRODUCT

(57) The present invention relates to a mineral wool product comprising mineral fibres bound by a cured formaldehyde-free binder, wherein the binder in its uncured state comprises carbohydrate in a content of 70 to 97 wt.% of the total binder component solids; the mineral wool product has an unaged delamination strength of 20 kPa or more; the mineral wool product has a ratio between the aged delamination strength and the unaged delamination strength of more than 40%.

EP 3 135 648 A1

## Description

### Field of the Invention

The present invention relates to a mineral wool product and a method of producing a mineral wool product.

### Background of the Invention

Mineral wool products (also termed mineral fibre products) generally comprise man-made vitreous fibres (MMVF) such as, e.g., glass fibres, ceramic fibres, basalt fibres, slag fibres, mineral fibres and stone fibres (rock fibres), which are bonded together by a cured thermoset polymeric binder material. For use as thermal or acoustical insulation products, bonded mineral fibre mats are generally produced by converting a melt made of suitable raw materials to fibres in conventional manner, for instance by a spinning cup process or by a cascade rotor process. The fibres are blown into a forming chamber and, while airborne and while still hot, are sprayed with a binder solution and randomly deposited as a mat or web onto a travelling conveyor. The fibre mat is then transferred to a curing oven where heated air is blown through the mat to cure the binder and rigidly bond the mineral fibres together.

In the past, the binder resins of choice have been phenol-formaldehyde resins which can be economically produced and can be extended with urea prior to use as a binder. However, the existing and proposed legislation directed to the lowering or elimination of formaldehyde emissions have led to the development of formaldehyde-free binders such as, for instance, the binder compositions based on polycarboxy polymers and polyols or polyamines, such as disclosed in EP-A-583086, EP-A-990727, EP-A-1741726, US-A-5,318,990 and US-A-2007/0173588.

Another group of non-phenol-formaldehyde binders are the addition/-elimination reaction products of aliphatic and/or aromatic anhydrides with alkanolamines, e.g., as disclosed in WO 99/36368, WO 01/05725, WO 01/96460, WO 02/06178, WO 2004/007615 and WO 2006/061249. These binder compositions are water soluble and exhibit excellent binding properties in terms of curing speed and curing density. WO 2008/023032 discloses urea-modified binders of that type which provide mineral wool products having reduced moisture take-up.

Since some of the starting materials used in the production of these binders are rather expensive chemicals, there is an ongoing need to provide formaldehyde-free binders which are economically produced.

A further effect in connection with previously known aqueous binder compositions for mineral fibres is that at least the majority of the starting materials used for the productions of these binders stem from fossil fuels. There is an ongoing trend of consumers to prefer products that are fully or at least partly produced from renewable materials and there is therefore a need to provide binders for mineral wool which are at least partly produced from renewable materials.

Mineral wool products must comply with the regulations especially regarding their mechanical properties. Also, the mechanical properties are in general deteriorated when the product is in use and are subject to changes in weather and the changing seasons. The mineral wool product is "aged" under these conditions. There are also regulations for the allowable extent of deterioration of mineral wool products.

Summary of the Invention

Previously known mineral wool products comprising binders being formaldehyde free and using renewable materials have deficiencies concerning the mechanical properties, in particular after aging.

Accordingly, it was an object of the present invention to provide a mineral wool product comprising a binder, said product having improved unaged and aged mechanical properties, is economically produced and is using renewable materials as starting products for the preparation of the binder.

A further object of the present invention was to provide a method of making such mineral wool product.

In accordance with a first aspect of the present invention, there is provided a mineral wool product comprising mineral fibres bound by a cured formaldehyde-free binder, wherein

- the binder in its uncured state comprises carbohydrate in a content of 70 to 97 wt.% of the total binder component solids;
- the mineral wool product has an unaged delamination strength of 20 kPa or more;
- the mineral wool product has a ratio between the aged delamination strength and the unaged delamination strength of more than 40%.

The uncured state of a binder is meant to characterize the state a binder has after all components making up the binder have been added. This is preferably the state the binder has just before being applied to the fibres.

In accordance with a second aspect of the present invention, there is provided a method of producing a mineral wool product as describes above which comprises the steps of contacting mineral fibres with a binder composition and

curing the binder composition.

The inventors have surprisingly found that it is possible to prepare a mineral wool product by using a formaldehyde free binder comprising 70 to 97 wt.-% of the total binder component solids in form of a carbohydrate and at the same time achieve an unaged delamination strength of 20 kPa or more and a ratio between the aged delamination strength and the unaged delamination strength of more than 40%. The mineral wool product according to the present invention therefore combines the advantages of previously known mineral wool products prepared by the use of formaldehyde free binders, whereby the binder used for the preparation of the mineral wool product of the present invention is formaldehyde free and at the same time produced from at least 70 wt.% of a carbohydrate component, i.e. a renewable source.

A detailed description of the protocol for measuring unaged delamination strength and aged delamination strength for the purpose of the present application is as follows.

__Delamination strength (unaged delamination strength)__

The test specimen is attached between two rigid plates or blocks, fastened in a tensile testing machine and pulled apart at a given speed. The maximum tensile force is recorded and the tensile strength of the test specimen is calculated. Reference is given to EN1607 in the following for further details.

"Delamination strength" is equal to the term "tensile strength perpendicular to faces". These two terms are used interchangeably. The tensile strength perpendicular to faces is the maximum recorded tensile force perpendicular to the product faces during the pulling operation, divided by the cross-sectional area of the test specimen.

Test specimens for the determination of delamination strength are cut into pieces of (300 ± 2) mm * (300 ± 2) mm and not closer than 15 mm from the edges of the product if possible. For this size the minimum number of measurements needed to obtain one test result is 3, as specified in EN13162 for mineral wool. Other specimen sizes may be used in case the force needed is higher than the tensile machine can handle.

The test specimens shall be cut from the product so that the test specimen base is normal to the direction of the tensile force applied to the product in its application.

Attach the test specimen in the tensile testing machine by means of the plate/block fixings and increase the tensile force with a constant speed until failure occurs. Record the maximum force, in kilonewtons. Reference is given to EN1607 for further details.

Calculate the delamination strength in kilopascals, using the equation:

(Maximum tensile force recorded, in kilonewtons) / (cross-sectional area of the test specimen, in square metres).

__Aged delamination strength__

The determination of the aged delamination strength follows from a delamination strength determination of a test specimen that has been subjected to ageing.

The ageing to produce an aged test specimen is described in the following. Reference is made to the Nordtest method NT Build 434: 1995.05 for further details.

In general: Ageing resistance is defined as the ability of the product to maintain the original mechanical properties, and it is calculated as the aged strength in percent of the original strength.

Two similar test specimens are cut out of the same slab, whereupon the ageing resistance is determined.

On one test specimen the properties without ageing pre-treatment are measured and the "unaged delamination strength" is determined. The other test specimen is exposed to accelerated ageing before the measurement takes place and the "aged delamination strength" is determined.

Test specimens are exposed to heat-moisture action for 15 minutes at 121 ± 2°C and 95 ± 5% relative humidity (1 ato.) in a pressure boiler.

After completed ageing the pressure boiler is switched off and cooled down to room temperature. After at least 24 hours the dimensions and density are determined. Test specimens with a weight increase of at least 10 g due to water uptake have to be dried at 105 °C until a constant weight ± 3 g has been achieved.

Finally, the test specimens are subjected to a delamination strength test as described above.

**Description of the Preferred Embodiments**

In a preferred embodiment, the ratio between the aged delamination strength and the unaged delamination

strength of the mineral wool product according to the present invention is more than 50%, preferably more than 60%.

It is highly surprising that it is possible to produce a mineral wool product bound by a cured formaldehyde free binder having a carbohydrate content of 70% or more and at the same time having such a high ratio of aged to unaged delamination strength.

Mineral wool product (mineral fibre product)

The mineral fibres employed may be any of man-made vitreous fibres (MMVF), glass fibres, ceramic fibres, basalt fibres, slag fibres, rock fibres, stone fibres and others. These fibres may be present as a wool product, e.g. like a rock wool product or a glass wool product.

Suitable fibre formation methods and subsequent production steps for manufacturing the mineral fibre product are those conventional in the art. Generally, the binder is sprayed immediately after fibrillation of the mineral melt on to the air-borne mineral fibres. The aqueous binder composition is normally applied in an amount corresponding to an LOI of 0.1 to 18.0 %, preferably 0.3 to 12.0 %, more preferably 0.5 to 8.0 % by weight.

The spray-coated mineral fibre web is generally cured in a curing oven by means of a hot air stream. The hot air stream may be introduced into the mineral fibre web from below, or above or from alternating directions in distinctive zones in the length direction of the curing oven.

Typically, the curing oven is operated at a temperature of from about 150°C to about 350°C. Preferably, the curing temperature ranges from about 200 to about 300°C. Generally, the curing oven residence time is from 30 seconds to 20 minutes, depending on, for instance, the product density.

If desired, the mineral wool web may be subjected to a shaping process before curing. The bonded mineral fibre product emerging from the curing oven may be cut to a desired format e.g., in the form of a batt. Thus, the mineral fibre products produced, for instance, have the form of woven and nonwoven fabrics, mats, batts, slabs, sheets, plates, strips, rolls, granulates and other shaped articles which find use, for example, as thermal or acoustical insulation materials, vibration damping, construction materials, facade insulation, reinforcing materials for roofing or flooring applications, as filter stock, as horticultural growing media and in other applications.

In accordance with the present invention, it is also possible to produce composite materials by combining the bonded mineral fibre product with suitable composite layers or laminate layers such as, e.g., metal, glass surfacing mats and other woven or non-woven materials.

The mineral fibre products according to the present invention generally have a density within the range of from 6 to 250 kg/m$^3$, preferably 20 to 200 kg/m$^3$. The mineral fibre products generally have a loss on ignition (LOI) within the range of 0.1 to 18.0 %, preferably 0.3 to 12.0 %, more preferably 0.5 to 8.0 % by weight.

In a preferred embodiment, the mineral wool product according to the present invention is in form of a flat roof insulation product or a façade product.

Whereby it is possible to produce the mineral wool product according to the present invention in the whole range of densities commonly used for such products, it is preferred that the density of the mineral wool product is in the range of 60-200 kg/m$^3$, such as 70-180 kg/m$^3$, in particular 80-150 kg/m$^3$.

It is further preferred, that the mineral wool product is a non-lamellae product. A lamellae product is defined as a mineral wool product consisting of lamellae of cured mineral wool. The lamellae have been formed by first producing a conventional mineral wool product and secondly cutting this product in lamellae. Thirdly, the lamellae are glued to each other to form a lamellae product.

A lamellae product has a general fibre direction orthogonal to the major surface of the product. It is an alternative product to first changing the general fibre direction of the web while still uncured and secondly curing the web with the changed general fibre direction.

In a preferred embodiment, the mineral wool product has an unaged delamination strength of 25 kPa or more, such as 30 kPa or more, such as 35 kPa or more.

While there is in principle no limitation concerning the pH which the binder is having in its uncured state, it is preferred that the binder in its uncured state has a pH of more than 6. In one embodiment the binder in its uncured state has a pH of 2 to 6.

**Carbohydrate component of the organic binder**

In a particular preferred embodiment, the binder in its uncured state comprises carbohydrate in a content of 70 to 84 wt.-% of the total binder component solids. Preferably, the carbohydrate is selected from the group consisting of hexose, such as dextrose, fructose, pentose such as xylose and/or sucrose, glucose syrup.

Preferably, the carbohydrate is selected from the group of dextrose and/or a glucose syrup with a Dextrose Equivalent (DE) value of 85 to 99.

In a further preferred embodiment, the carbohydrate is a glucose syrup with a Dextrose Equivalent (DE) value

of 15 to 50.

In a further preferred embodiment, the carbohydrate is a carbohydrate with a Dextrose Equivalent (DE) value of 50 to 85.

In a preferred embodiment, the carbohydrate is selected from hexoses, in particular allose, altrose, glucose, mannose, gulose, idose, galactose, talose, psicose, fructose, sorbose and/or tagatose; and/or pentoses, in particular arabinose, lyxose, ribose, xylose, ribulose and/or xylulose; and/or tetroses, in particular erythrose, threose, and/or erythrulose.

Starch may be used as a raw material for various carbohydrates such as glucose syrups and dextrose. Depending on the reaction conditions employed in the hydrolysis of starch, a variety of mixtures of dextrose and intermediates is obtained which may be characterized by their DE number. DE is an abbreviation for Dextrose Equivalent and is defined as the content of reducing sugars, expressed as the number of grams of anhydrous D-glucose per 100 g of the dry matter in the sample, when determined by the method specified in International Standard ISO 5377-1981 (E). This method measures reducing end groups and attaches a DE of 100 to pure dextrose and a DE of 0 to pure starch.

In a preferred embodiment, the carbohydrate is selected from sucrose, reducing sugars, in particular dextrose, polycarbohydrates, and mixtures thereof, preferably dextrins and maltodextrins, more preferably glucose syrups, and more preferably glucose syrups with a dextrose equivalent value of DE = 15-99, such as DE = 50-85, such as DE = 15-50, such as DE = 60-99 such as DE = 85-99. The term "dextrose" as used in this application is defined to encompass glucose and the hydrates thereof.

In a further preferred embodiment, the carbohydrate is selected from the group of dextrose and/or glucose syrup with a dextrose equivalent (DE) value of 85 to 99. In a further preferred embodiment, the carbohydrate is glucose syrup with a dextrose equivalent (DE) value of 15 to 50.

**Other components of the binder**

The binders according to the present invention are formaldehyde free.

For the purpose of the present application, the term "formaldehyde free" is defined to characterise a mineral wool product where the emission is below 5 $\mu g/m^2/h$ of formaldehyde from the mineral wool product, preferably below 3 $\mu g/m^2/h$. Preferably the test is carried out in accordance with ISO 16000 for testing aldehyde emissions.

Preferably, the binder composition does not contain added formaldehyde. In a preferred embodiment, the mineral wool product according to the present invention is such that the binder does not comprise, in its uncured state, a carboxylic acid, such as a dicarboxylic acid.

Preferably, the mineral wool products according to the present invention is such that the binder further comprises, in its uncured state:

a component (i) in the form of one or more compounds selected from

- compounds of the formula, and any salts thereof:

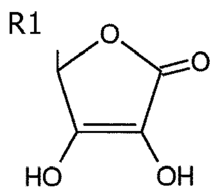

in which R1 corresponds to H, alkyl, monohydroxyalkyl, dihydroxyalkyl, polyhydroxyalkyl, alkylene, alkoxy, amine;

- compounds of the formula, and any salts thereof:

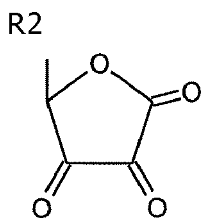

in which R2 corresponds to H, alkyl, monohydroxyalkyl, dihydroxyalkyl, polyhydroxyalkyl, alkylene, alkoxy,

amine;

a component (ii) in the form of one or more compounds selected from the group of ammonia, amines or any salts thereof.

Preferably, the binders according to the present invention have a pH of 6-9.

Preferably, alkyl is $C_1$-$C_{10}$ alkyl.
Preferably, monohydroxyalkyl is monohydroxy $C_1$-$C_{10}$ alkyl.
Preferably, dihydroxyalkyl is dihydroxy $C_1$-$C_{10}$ alkyl.
Preferably, polyhydroxyalkyl is polyhydroxy $C_1$-$C_{10}$ alkyl.
Preferably, alkylene is alkylene $C_1$-$C_{10}$ alkyl.
Preferably, alkoxy is alkoxy $C_1$-$C_{10}$ alkyl.

Preferably, component (i) is in the form of one or more components selected from ascorbic acid or isomers or salts or derivatives, preferably oxidized derivatives, thereof.

In a preferred embodiment, component (i) is selected from L-ascorbic acid, D-isoascorbic acid, 5,6-isopropylidene ascorbic acid, dehydroascorbic acid and/or any salt of the compounds, preferably calcium, sodium, potassium, magnesium or iron salts.

In a further preferred embodiment, component (i) is selected from L-ascorbic acid, D-isoascorbic acid, 5,6-isopropylidene ascorbic acid and dehydroascorbic acid.

In a preferred embodiment, the mineral wool product according to the present invention is such that the binder comprises, in its uncured state: a component (ii) in form of one or more compounds selected from the group consisting of ammonia and/or amines, such as piperazine, polyamine, such as hexamethylenediamine, m-xylylenediamine, diethylenetriamine, triethylenetetramine, tetraethylenepentamine, and/or monoethanolamine, diethanolamine, and/or triethanolamine.

In a preferred embodiment, the proportion of components (i), (ii) and carbohydrate is within the range of 1 to 50 weight-% component (i) based on the mass of component (i) and carbohydrate, 50 to 99 weight-% carbohydrate based on the mass of component (i) and carbohydrate, and 0.1 to 10.0 molar equivalents of component (ii) relative to component (i).

In a preferred embodiment, the mineral wool product according to the present invention is such that the binder further comprises, in its uncured state: a component (iii) in the form of one or more compounds selected from sulfamic acid, derivatives of sulfamic acid or any salt thereof.

In a preferred embodiment, component (iii) is selected from the group consisting of sulfamic acid and any salt thereof, such as ammonium sulfamate, calcium sulfamate, sodium sulfamate, potassium sulfamate, magnesium sulfamate, cobalt sulfamate, nickel sulfamate, N-cyclohexyl sulfamic acid and any salt thereof, such as sodium N-cyclohexyl sulfamate.

In a particularly preferred embodiment, component (iii) is ammonium sulfamate.

In a preferred embodiment, the aqueous binder composition according to the present invention comprises glucose syrup having a DE of 60 to less than 100, in particular of 60 to 99, more particular 85 to 99 and a component (iii) in form of sulfamic acid and/or its salts, preferably ammonium sulfamate and/or N-cyclohexyl sulfamic acid and/or its salts.

In a preferred embodiment, the proportion of carbohydrate and (iii) is within the range of 0.5-15 wt.-%, in particular 1-12 wt.-%, more particular 2-10 wt.-% component (iii), based on the mass of carbohydrate.

In a particularly preferred embodiment, the component (iii) is in form of N-cyclohexyl sulfamic acid and any salt thereof and the proportion of carbohydrate and component (iii) in form of N-cyclohexyl sulfamic acid and any salt thereof is within the range of 0.5-20 wt.-%, in particular 1-15 wt.-%, more particular 2-10 wt.-% component (iii), based on the mass of carbohydrate.

In a preferred embodiment, the mineral wool product according to the present invention is such that the binder further comprises, in its uncured state urea preferably in an amount of 0 to 40 weight-% urea, preferably 0 to 20 weight-% urea, based on the mass of components (i) and/or (iii), and carbohydrate.

In a preferred embodiment, the mineral wool product according to the present invention is such that the binder further comprises, in its uncured state hypophosphorous acid or any salts thereof.

In a particularly preferred embodiment, the hypophosphorous acid or salts thereof, preferably the sodium salt of hypophosphorous acid is present in an amount of 0.05 to 10 weight-%, such as 1 to 7 weight-%, based on the mass of component (i), and carbohydrate, whereby component (ii) is preferably present in the amount of 0.1 to 10 molar equivalents of component (ii) relative to the combined molar equivalents of component (i) and hypophosphorous acid.

In a preferred embodiment, the mineral wool product according to the present invention is such that the binder comprises, in its uncured state, component (i) in the form of ascorbic acid; component (ii) in the form of ammonia; carbohydrate in the form of dextrose and/or a glucose syrup with a DE of 60-99; component (iii) in the form of sulfamic

acid and/or its salts, preferably ammonium sulfamate; and hypophosphorous acid and/or its salts, preferably ammonium hypophosphite. In a preferred embodiment, the mineral wool product according to the present invention is such that the binder further comprises in its uncured state a further component, which is in form of one or more reactive or non-reactive silicones.

In a preferred embodiment, the one or more reactive or non-reactive silicones is selected from the group consisting of silicone constituted of a main chain composed of organosiloxane residues, especially diphenylsiloxane residues, alkylsiloxane residues, preferably dimethylsiloxane residues, bearing at least one hydroxyl, carboxyl or anhydride, amine, epoxy or vinyl functional group capable of reacting with at least one of the constituents of the binder composition and is preferably present in an amount of 0.1 to 15 weight-%, preferably 0.1 to 10 weight-%, more preferably 0.3 to 8 weight-%, based on the binder solids.

Further components of the binder composition

Optionally, the aqueous binder composition according to the present invention can contain further components besides the components mentioned above. However, in a preferred embodiment >95 weight-% of the total solids content of the composition is formed by carbohydrate, component (i), component (ii), component (iii), hypophosphorous acid or salts thereof and urea based on the binder component solids content.

In other words, any further components, if present, are present preferably in an amount of <5 weight-% of the total binder component solids content of the binder composition.

## Method of producing the mineral wool product

The present invention is also directed to a method of producing a mineral wool product as described above which comprises steps of contacting mineral fibers with the binder composition as described above and curing the binder composition.

## Examples

Several binders were used in the test production of a mineral wool product DP-GF (Dachplatte-Grossformat) for flat roof insulation.

The binders were used by spraying the binder solutions near a cascade rotor apparatus into the formed cloud of fibres in the forming chamber. The coated fibres were collected on transport conveyors and transferred into a curing oven for a curing time of 5-15 minutes at a curing temperature in the interval of 250°C to 280°C.

The products shown in Table 1-1 and Table 1-2 were tested for density, loss on ignition (LOI), unaged delamination strength and aged delamination strength.

The binders used in the test production are further described in the following.

The amounts of reactants used in the mineral wool production tests were scaled up from the amounts given in the Binder Examples below.

## Binder component solids content

The content of each of the components in a given binder solution before curing is based on the anhydrous mass of the components.

## Binder solids

The content of binder after curing is termed "binder solids".
Disc-shaped stone wool samples (diameter: 5 cm; height 1 cm) were cut out of stone wool and heat-treated at 580 °C for at least 30 minutes to remove all organics.

The binder solids of a given binder solution was measured by distributing two samples of the binder solution (each approx. 2.0 g) onto two of the heat treated stone wool discs which were weighed before and after application of the binder solution.

The binder loaded stone wool discs were then heated at 200 °C for 1 hour.

After cooling and storing at room temperature for 10 minutes, the samples were weighed and the binder solids was calculated as an average of the two results. A binder with a desired binder solids could then be produced by diluting with the required amount of water or water and 10% aq. silane (Momentive VS-142).

The glucose syrup used has a DE-value of 95 to less than 100 (C*sweet D02767 ex Cargill), except otherwise stated.

**Binder example, reference A**

This binder is a mixture of a Hexion 0415M (a commercially available phenol-formaldehyde resin modified with urea) and a DE=30 glucose syrup, (Cleardex 31/42 Corn Syrup from Cargill) said glucose syrup being present in 25 wt.% of the total binder component solids.

**Binder example, reference B**

This binder is a mixture of a Hexion 1764M30 (a commercially available phenol-formaldehyde resin modified with urea) and a DE=30 glucose syrup, (Cleardex 31/42 Corn Syrup from Cargill) said glucose syrup being present in 25 wt.% of the total binder component solids.

**Binder example, binder 1**

A mixture of L-ascorbic acid (3.75 g, 21.3 mmol) and 75.1 wt.% aq. glucose syrup (15.0 g; thus efficiently 11.3 g glucose syrup) in water (31.3 g) was stirred at room temperature until a clear solution was obtained. 50% aq. hypophosphorous acid (0.60 g; thus efficiently 0.30 g, 4.55 mmol hypophosphorous acid) was then added (pH 1.3). 28% aq. ammonia (1.93 g; thus efficiently 0.54 g, 31.7 mmol ammonia) was then added dropwise until pH = 6.1. The binder solids were measured (19.4%) and the binder mixture was diluted with water (0.286 g / g binder mixture) and 10% aq. silane (0.010 g / g binder mixture). The final binder mixture had pH = 6.0.

**Binder example, binder 3**

A mixture of L-ascorbic acid (1.50 g, 8.52 mmol) and 75.1 wt.% aq. glucose syrup (18.0 g; thus efficiently 13.5 g glucose syrup) in water (30.5 g) was stirred at room temperature until a clear solution was obtained. 50% aq. hypophosphorous acid (0.60 g; thus efficiently 0.30 g, 4.55 mmol hypophosphorous acid) was then added (pH 1.3). 28% aq. ammonia (0.99 g; thus efficiently 0.28 g, 16.3 mmol ammonia) was then added dropwise until pH = 6.7. The binder solids were measured (20.1%) and the binder mixture was diluted with water (0.331 g / g binder mixture) and 10% aq. silane (0.010 g / g binder mixture). The final binder mixture had pH = 6.4.

**Binder example, binder 5**

A mixture of L-ascorbic acid (1.50 g, 8.52 mmol) and 75.1 wt.% aq. glucose syrup (18.0 g; thus efficiently 13.5 g glucose syrup) in water (30.5 g) was stirred at room temperature until a clear solution was obtained. Urea (0.75 g) and 50% aq. hypophosphorous acid (0.60 g; thus efficiently 0.30 g, 4.55 mmol hypophosphorous acid) was then added (pH 1.2). 28% aq. ammonia (1.09 g; thus efficiently 0.31 g, 17.9 mmol ammonia) was then added dropwise until pH = 6.5. The binder solids were measured (20.7 wt.%) and the binder mixture was diluted with water (0.370 g / g binder mixture) and 10% aq. silane (0.010 g / g binder mixture). The final binder mixture had pH = 6.7.

**Binder example, binder 8**

A mixture of 75.1 wt.% aq. glucose syrup (20.0 g; thus efficiently 15.0 g glucose syrup) and ammonium sulfamate (0.75 g, 6.57 mmol) in water (35.0 g) was stirred at room temperature until a clear solution was obtained (pH 4.2). 28% aq. ammonia (0.069 g; thus efficiently 0.02 g, 1.13 mmol ammonia) was then added dropwise until pH = 8.1. The binder solids were measured (19.0%) and the binder mixture was diluted with water (0.250 g / g binder mixture) and 10% aq. silane (0.019 g / g binder mixture). The final binder mixture had pH = 8.3.

**Binder example, binder 10**

A mixture of 75.1 wt.% aq. glucose syrup (20.0 g; thus efficiently 15.0 g glucose syrup), ammonium sulfamate (0.75 g, 6.57 mmol) and urea (1.50 g) in water (35.0 g) was stirred at room temperature until a clear solution was obtained (pH 4.4). 28% aq. ammonia (0.035 g; thus efficiently 0.01 g, 0.58 mmol ammonia) was then added dropwise until pH = 8.0. The binder was then measured (21.1wt.%) and the binder mixture was diluted with water (0.384 g / g binder mixture) and 10% aq. silane (0.021 g / g binder mixture). The final binder mixture had pH = 8.5.

**Binder example, binder 12**

A mixture of xylose (15.0 g) and ammonium sulfamate (0.75 g, 6.57 mmol) in water (40.0 g) was stirred at room

temperature until a clear solution was obtained (pH 4.3). 28% aq. ammonia (0.055 g; thus efficiently 0.02 g, 0.90 mmol ammonia) was then added dropwise until pH = 8.2. The binder solids were measured (18.4 wt.%) and the binder mixture was diluted with water (0.210 g / g binder mixture) and 10% aq. silane (0.018 g / g binder mixture). The final binder mixture had pH = 6.8.

The other binders mentioned in Table 1-1 and 1-2 were prepared in a manner analogous to the preparation described above.

TABLE 1-1:

| **Binder** | A Hexion 0415M 25% Glycose syrup DE = 30 | B Hexion 1764M30 25% Glycose syrup DE = 30 | 1 | 2 | 3 | 4 | 5 | 6 | 7 |
|---|---|---|---|---|---|---|---|---|---|
| **Binder composition** | | | | | | | | | |
| Ascorb. acid or deriv. (%-wt.) | | | | | | | | | |
| L-Ascorbic acid [a] | - | - | 25 | 20 | 10 | 10 | 10 | 10 | 10 |
| Carbohydrate (%-wt.) | | | | | | | | | |
| Glucose syrup [a] | - | - | 75 | 80 | 90 | 90 | 90 | 90 | 90 |
| Xylose | - | - | - | - | - | - | - | - | - |
| Additive (%-Wt.)[a] | | | | | | | | | |
| Urea | - | - | - | - | - | 5 | 5 | 10 | 15 |
| Hypophosphorous acid | - | - | 2 | 2 | 2 | - | 2 | 2 | 2 |
| Ammonium sulfamate | - | - | - | - | - | - | - | - | - |
| Amine (equiv.) [b] | | | | | | | | | |
| Ammonia (added) | - | - | 1.2 | 1.5 | 1.2 | 1.6 | 1.4 | 1.2 | 1.6 |
| Silane (% of binder solids) | 0.5 | 0.5 | 0.5 | 0.5 | 0.5 | 0.5 | 0.5 | 0.5 | 0.5 |
| **Product properties** | | | | | | | | | |
| Density (kg/$m^3$) | 144 | 140 | 143 | 143 | 146 | 139 | 148 | 137 | 140 |
| LOI (%) | 3.6 | 3.5 | 4.2 | 3.4 | 3.4 | 4.0 | 3.4 | 3.6 | 3.8 |
| Unaged delamination (kPa) | 36 | 34 | 32 | 34 | 34 | 20 | 37 | 22 | 20 |
| Aged delamination (kPa) | 18 | 19 | 18 | 22 | 23 | 10 | 23 | 13 | 12 |
| Aged/unaged delamination (%) | 50 | 56 | 56 | 65 | 68 | 50 | 62 | 59 | 60 |
| [a] Of ascorbic acid (or derivative) + carbohydrate.[b] Molar equivalents relative to ascorbic acid + additives. | | | | | | | | | |

TABLE 1-2:

| **Binder** | A Hexion 0415M 25% Glycose syrup DE = 30 | B Hexion 1764M30 25% Glycose syrup DE = 30 | 8 | 8 | 9 | 10 | 11 | 12 |
|---|---|---|---|---|---|---|---|---|
| **Binder composition** | | | | | | | | |
| Ascorb. acid or deriv. (%-wt.) | | | | | | | | |
| L-Ascorbic acid | - | - | 0 | 0 | 0 | 0 | 0 | 0 |
| Carbohydrate (%-wt.) | | | | | | | | |
| Glucose syrup | - | - | 100 | 100 | 100 | 100 | 100 | - |
| Xylose | - | - | - | - | - | - | - | 100 |
| Additive (%-wt.)[a] | | | | | | | | |
| Urea | - | - | - | | 5 | 10 | 15 | - |
| Ammonium sulfamate | - | - | 5 | 5 | 5 | 5 | 5 | 5 |
| Amine (equiv.) [b] | | | | | | | | |
| Ammonia (added) | - | - | 0.2 | 0.2 | 0.1 | 0.1 | 0.1 | 0.1 |
| Silane (% of binder solids) | 0.5 | 0.5 | 1.0 | 1.0 | 1.0 | 1.0 | 1.0 | 0.5 |
| **Product properties** | | | | | | | | |
| Density (kg/m$^3$) | 144 | 140 | 153 | 145 | 145 | 144 | 146 | 149 |
| LOI (%) | 3.6 | 3.5 | 3.3 | 4.4 | 4.2 | 3.5 | 3.6 | 3.9 |
| Unaged delamination (kPa) | 36 | 34 | 36 | 35 | 30 | 32 | 23 | 29 |
| Aged delamination (kPa) | 18 | 19 | 19 | 16 | 14 | 20 | 14 | 16 |
| Aged/unaged delamination (%) | 50 | 56 | 53 | 46 | 47 | 63 | 61 | 55 |
| [a] Of carbohydrate.[b] Molar equivalents relative to ammonium sulfamate. | | | | | | | | |

## Claims

1. A mineral wool product comprising mineral fibres bound by a cured formaldehyde-free binder, wherein

   - the binder in its uncured state comprises carbohydrate in a content of 70 to 97 wt.% of the total binder component solids;
   - the mineral wool product has an unaged delamination strength of 20 kPa or more;
   - the mineral wool product has a ratio between the aged delamination strength and the unaged delamination strength of more than 40%.

2. A mineral wool product according to claim 1, wherein said product has a ratio between the aged delamination strength and the unaged delamination strength of more than 50%, in particular more than 60%.

3. A mineral wool product according to claim 1 or 2, wherein said product is a flat roof insulation product.

4. A mineral wool product according to claim 1 or 2, wherein said product is a facade product.

**5.** A mineral wool product according to any one of the preceding claims, wherein said product has an unaged delamination strength of 30 kPa or more.

**6.** A mineral wool product according to any of the preceding claims, wherein the density of the mineral wool product is in the range of 60-200 kg/$m^3$, such as 70-180 kg/$m^3$, such as 80-150 kg/$m^3$.

**7.** A mineral wool product according to any of the preceding claims, wherein the mineral wool product is a non-lamellae product.

**8.** A mineral wool product according to any of the preceding claims, wherein the binder in its uncured state has a pH of more than 6.

**9.** A mineral wool product according to any of the preceding claims, wherein the binder in its uncured state comprises carbohydrate in a content of 70 to 84 wt.% of the total binder component solids.

**10.** A mineral wool product according to any of the preceding claims, wherein the carbohydrate is selected from the group consisting of hexose, such as dextrose, fructose, pentose such as xylose and/or sucrose, glucose syrup.

**11.** A mineral wool product according to claim 10, wherein the carbohydrate is selected from the group of dextrose and/or a glucose syrup with a Dextrose Equivalent (DE) value of 85 to 99.

**12.** A mineral wool product according to claim 10, wherein the carbohydrate is a glucose syrup with a Dextrose Equivalent (DE) value of 15 to 50.

**13.** A mineral wool product according to any of the preceding claims, wherein the binder further comprises, in its uncured state:

a component (i) in the form of one or more compounds selected from

- compounds of the formula, and any salts thereof:

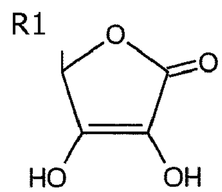

in which R1 corresponds to H, alkyl, monohydroxyalkyl, dihydroxyalkyl, polyhydroxyalkyl, alkylene, alkoxy, amine;

- compounds of the formula, and any salts thereof:

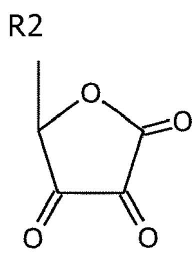

in which R2 corresponds to H, alkyl, monohydroxyalkyl, dihydroxyalkyl, polyhydroxyalkyl, alkylene, alkoxy, amine;
a component (ii) in the form of one or more compounds selected from the group of ammonia, amines or any salts thereof.

**14.** A mineral wool product according to claims 1 to 13, wherein the binder comprises, in its uncured state: a component (ii) in the form of one or more compounds selected from the group consisting of ammonia and/or amines, such as piperazine, polyamine, such as hexamethylenediamine, m-xylylenediamine, diethylenetriamine, triethylenetetramine, tetraethylenepentamine, and/or monoethanolamine, diethanolamine, and/or triethanolamine.

**15.** A mineral wool product according to claims 1 to 14, wherein the binder further comprises, in its uncured state: a component (iii) in the form of one or more compounds selected from sulfamic acid, derivatives of sulfamic acid or any salt thereof.

**16.** A mineral wool product according to claims 1 to 15, wherein the binder further comprises, in its uncured state, urea.

**17.** A mineral wool product according to claims 1 to 16, wherein the binder further comprises, in its uncured state, hypophosphorous acid or any salt thereof.

**18.** A method of producing a mineral wool product according to claims 1 to 17 which comprises the steps of contacting mineral fibres with a binder composition and curing the binder composition.

Europäisches Patentamt
European Patent Office
Office européen des brevets

# EUROPEAN SEARCH REPORT

Application Number
EP 15 18 3045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/019235 A1 (KNAUF INSULATON LTD [GB]; HAMPSON CARL [GB]; MUELLER GERT [US]; APPLEY) 12 February 2009 (2009-02-12) | 1-8,10, 11,14,18 | INV. C03C25/32 D04H1/4209 D04H1/60 D04H1/64 E04B1/76 |
| Y | * example 1 * | 12,16 | |
| X | WO 2011/044490 A1 (OWENS CORNING INTELLECTUAL CAP [US]; HAWKINS CHRISTOPHER [US]; HERNAND) 14 April 2011 (2011-04-14) * examples * | 1-7,9, 10, 12-15, 17,18 | |
| X | WO 2013/179323 A1 (STM TECHNOLOGIES S R L [IT]; LA GRECA MARCO [IT]; MASSINI ROBERTO [IT]) 5 December 2013 (2013-12-05) * claims 17-19; examples * | 1-8,10, 15,18 | |
| Y | WO 2010/139899 A1 (SAINT GOBAIN ISOVER [FR]; JAFFRENNOU BORIS [FR]; RONCUZZI CLAUDIO [FR]) 9 December 2010 (2010-12-09) * claim 22; examples * | 12,16 | |

TECHNICAL FIELDS SEARCHED (IPC)

C03C
D04H
E04B

The present search report has been drawn up for all claims

1

| Place of search | Date of completion of the search | Examiner |
|---|---|---|
| Munich | 24 November 2015 | Pollio, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 15 18 3045

This annex lists the patent family members relating to the patent documents cited in the above-mentioned European search report. The members are as contained in the European Patent Office EDP file on
The European Patent Office is in no way liable for these particulars which are merely given for the purpose of information.

24-11-2015

| Patent document cited in search report | Publication date | Patent family member(s) | Publication date |
|---|---|---|---|
| WO 2009019235 A1 | 12-02-2009 | AR 067799 A1 | 21-10-2009 |
| | | AU 2008285696 A1 | 12-02-2009 |
| | | BR PI0815075 A2 | 03-02-2015 |
| | | CA 2695407 A1 | 12-02-2009 |
| | | CL 2008002297 A1 | 26-12-2008 |
| | | CN 101821212 A | 01-09-2010 |
| | | CN 103773055 A | 07-05-2014 |
| | | EA 201000279 A1 | 29-04-2011 |
| | | EA 201490282 A1 | 29-08-2014 |
| | | EP 2176183 A1 | 21-04-2010 |
| | | EP 2176184 A1 | 21-04-2010 |
| | | GB 2451719 A | 11-02-2009 |
| | | GB 2496951 A | 29-05-2013 |
| | | JP 5704751 B2 | 22-04-2015 |
| | | JP 2010535864 A | 25-11-2010 |
| | | JP 2014031517 A | 20-02-2014 |
| | | KR 20100065273 A | 16-06-2010 |
| | | TW 200914560 A | 01-04-2009 |
| | | UA 103002 C2 | 10-09-2013 |
| | | US 2010301256 A1 | 02-12-2010 |
| | | US 2011260094 A1 | 27-10-2011 |
| | | US 2012168667 A1 | 05-07-2012 |
| | | US 2012205572 A1 | 16-08-2012 |
| | | US 2014008563 A1 | 09-01-2014 |
| | | WO 2009019232 A1 | 12-02-2009 |
| | | WO 2009019235 A1 | 12-02-2009 |
| WO 2011044490 A1 | 14-04-2011 | AU 2010303254 A1 | 26-04-2012 |
| | | CA 2777078 A1 | 14-04-2011 |
| | | CN 102695684 A | 26-09-2012 |
| | | EP 2485989 A1 | 15-08-2012 |
| | | EP 2899227 A1 | 29-07-2015 |
| | | US 2011086567 A1 | 14-04-2011 |
| | | US 2015017858 A1 | 15-01-2015 |
| | | US 2015033981 A1 | 05-02-2015 |
| | | WO 2011044490 A1 | 14-04-2011 |
| WO 2013179323 A1 | 05-12-2013 | CN 104350112 A | 11-02-2015 |
| | | EP 2855601 A1 | 08-04-2015 |
| | | KR 20150016601 A | 12-02-2015 |
| | | WO 2013179323 A1 | 05-12-2013 |
| WO 2010139899 A1 | 09-12-2010 | AR 079590 A1 | 08-02-2012 |
| | | AU 2010255574 A1 | 02-02-2012 |
| | | CA 2763970 A1 | 09-12-2010 |
| | | CN 102459112 A | 16-05-2012 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 15 18 3045

This annex lists the patent family members relating to the patent documents cited in the above-mentioned European search report. The members are as contained in the European Patent Office EDP file on
The European Patent Office is in no way liable for these particulars which are merely given for the purpose of information.

24-11-2015

| Patent document cited in search report | Publication date | Patent family member(s) | Publication date |
|---|---|---|---|
| | | EP 2438129 A1 | 11-04-2012 |
| | | FR 2946352 A1 | 10-12-2010 |
| | | JP 2012528948 A | 15-11-2012 |
| | | KR 20120034075 A | 09-04-2012 |
| | | RU 2011154198 A | 20-07-2013 |
| | | US 2012070645 A1 | 22-03-2012 |
| | | WO 2010139899 A1 | 09-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 583086 A
- EP 990727 A
- EP 1741726 A
- US 5318990 A
- US 20070173588 A
- WO 9936368 A
- WO 0105725 A
- WO 0196460 A
- WO 0206178 A
- WO 2004007615 A
- WO 2006061249 A
- WO 2008023032 A